# EUROPEAN PATENT SPECIFICATION

(11) **EP 0 961 376 B1**
(45) Date of publication and mention of the grant of the patent: **16.02.2000**
(21) Application number: 98830187.5
(22) Date of filing: 27.03.1998
(51) Int. Cl.: H02B 1/00, H02G 3/08, H02B 1/46

(54) **A coupling having eccentric sections, in particular for boxes for electric material**
Kupplung mit exzentrischen Teilen, insbesondere für Gehäuse zur elektrischen Installation
Raccord comportant des parties excentriques, notamment pour les boîtes à matériel électrique

(43) Date of publication of application: 01.12.1999
(73) Proprietor: Bertoldo & C. Srl, 10078 Venaria Reale (Torino) (IT)
(72) Inventor: Bertoldo, Piero, 10070 Balangero, Torino (IT)
(74) Representative: Marchitelli, Mauro

(56) References cited:
- BE-A- 746 880
- US-A- 4 198 537
- US-A- 4 640 433

## Description

The present invention relates to a coupling, in particular for boxes for electric material (e.g. BE-A-746 880), comprising an attachment section for connecting the coupling into a hole of a wall and a coupling section provided with means for the connection to a protection element of an electric installation (US-A-4 198 537).

Couplings of this type are normally used for realizing domestic or industrial electric installations and serve for connecting protection elements of electric wires, typically formed by smooth or corrugated conduits, smooth or spiral protection sheaths, or for connecting to the box electric cables with insulating sheaths by means of clamping devices.

In the realization of electric installations there are often used protection elements with different diameters and on the market different standardized sizes exist for protection conduits and sheaths for electric installations. The dimensions of the diameter of the protection element more frequently used are 16, 20, 25 and 32 mm.

With the coupling of known type when conduits with different diameters are connected to the same box the conduits are normally arranged at different distances from the wall to which the box is fixed, which involves a vary bad result from the aesthetic point of view and difficulties for arranging and for fixing the protection elements, especially if they are rigid.

The present invention has the object to provide an improved coupling which overcomes the above drawbacks.

US-A-4 640 433 describes a metal box for electric connections which comprises two punch circles for selectively forming a small or a large opening in a wall of the box by removing either an inner or an outer punch disk, or knockout. The centre of the inner knockout is offset from the centre of the outer knockout so that a positive ground can be established between a smaller conduit and the box wall by a washer when the smaller conduit is mounted therein.

According to the present invention, this object is achieved by a coupling having the features forming the subject of the main claim.

The coupling according to the present invention has an attachment section and a coupling section which are eccentric to each other. In this way, it is possible to realize a family of couplings with different dimensions of the coupling section formed so that by aligning the axes of the respective attachment sections, the coupling sections of all the couplings of the family will be tangent to one and the same plane. Therefore, by using the coupling according to the invention it is possible to arrange protection elements with different diameters at the same distance from a reference surface without having to form holes at different levels on the wall of the box.

Further characteristics and advantages of the present invention will become clear in the course of the detailed description which follows, given purely by way of non-limiting example, in which:
- figure **1** is a perspective view showing a box for electric material provided with different couplings according to the present invention,
- figure **2** is a cross section along the line II-II of figure 1, and
- figure **3** is a lateral elevation schematic view showing a family of couplings with different dimensions of the coupling section.

With reference to the figures, 10 indicates a box of plastic material intended to be used as a pull box or for containing electric or electronic apparatus in domestic or industrial electric installations. The box 10 comprises four lateral walls 12 and one bottom wall 14. In the lateral walls 12 there are formed a plurality of non-through notches 16 with circular profile which define lines of preferential breaking which permit to remove a disc 18 for forming a through aperture 20. The holes 20 formed by the removal of the discs 18 all have the same diameters and are arranged at the same distance from the bottom wall 14. ln an alternative, the box 12 could be devoid of notches and in this case the holes 20 would be formed by means of a drilling tool of a type known per se. As a further alternative, for each hole the box could be provided with two or more lines of preferential breaking with different diameters, concentric or eccentric, for permitting the formation of holes 20 with different diameters.

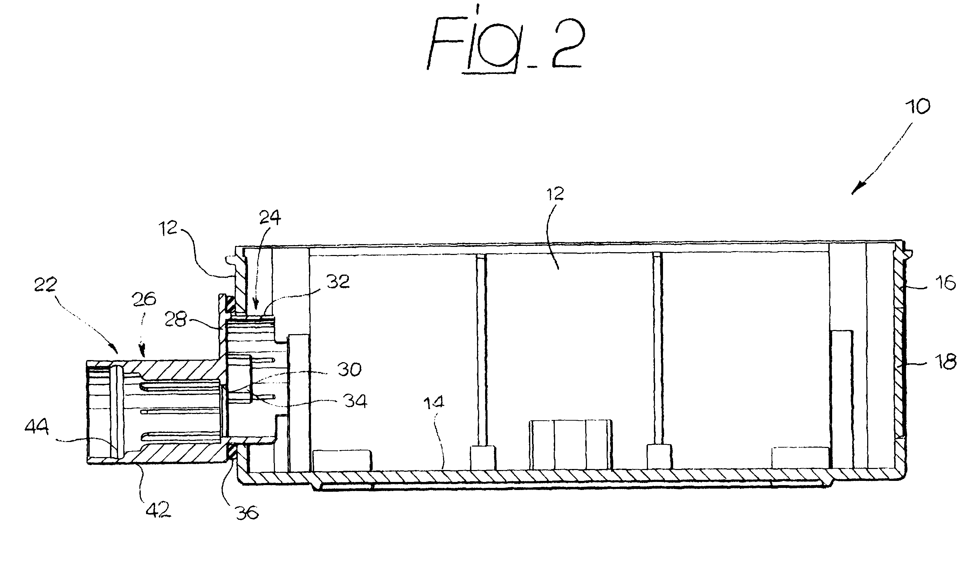

Reference numerals 22 indicate a set of different couplings intended to be inserted in the apertures 20 for connecting to the box 10 electric cables or protection elements such as for example smooth or corrugated conduits of plastic material, smooth or spiral sheaths, metallic conduits, etc. Each coupling 22 is made of injection moulded plastic material and has an attachment section 24 and a coupling section 26. The two sections 24, 26 are separated from each other by a disc-shaped portion 28 provided with a hole 30 (figure 2) which establishes a communication between the two sections 24, 26.

The attachment section 24 can be formed in any way adapted to mechanically secure the coupling 22 to the wall 12. In the example shown in the figures, the attachment section 24 is formed as disclosed in a parallel European patent application 98 830 186.7 of the same applicant titled "A liquid-tight coupling, in particular for boxes for electric material". In the embodiment shown, the attachment section 24 comprises a tubular portion 32 which is inserted and snap engaged in the trough hole 20 by means of snap engagement teeth 34. An annular seal 36 is axially compressed between the disc-shaped portion 28 and the wall 12. The attachment section formed in this way is only a preferred embodiment of the present invention but in an alternative could be substituted by connection means of a different type, for example by a thread, by a bayonet connection, or by any other system which permits to obtain a mechanical connection, liquid-tight or not, between the coupling 22 and the wall 12.

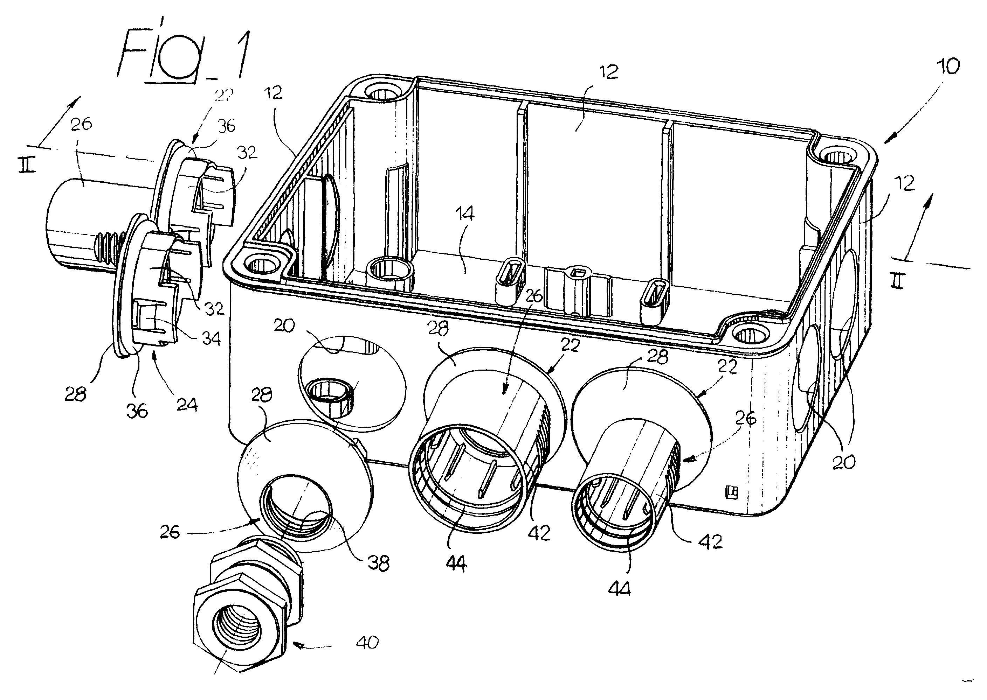

The coupling section 26 has a shape which depends on the type of element which must be connected to the box 10. In the most common cases the coupling 22 is used for connecting to the box 10 smooth or corrugated protection conduits, smooth or spiral flexible sheaths or electric cables provided with insulating sheaths. In figure 1 are shown the typical configurations of the coupling sections 26 for the connection of insulated cables or of conduits and sheath. When an electric cable already provided with an insulating sheath must be connected to the box 10, the coupling section has simply the shape of a threaded hole 38, with metric or PG thread, adapted to receive a clamping device of a type per se known. In addition to the case of the threaded hole which receives a known clamping accessory provided with a male thread, there is the possibility to realize an accessory provided on one side of an attachment system and on the other side reproducing all the parts of a clamping device of a known type. In practice, this would be a standard clamping device provided with the previously disclosed snap engagement system.

When the coupling 22 serves for connecting to the box 10 a protection element formed by a conduit or by a sheath (smooth, spiral or corrugated) the attachment section 26 of the coupling 22 has a tubular portion 42, preferably provided with a seat 44 adapted to receive a seal of the type disclosed in European patent No. 515325 of the same Applicant, adapted to carry out both mechanical constraint and the seal to liquids on the surface of conduits both smooth and corrugated.

The coupling section 26 could also be formed in any other way adapted to guarantee a mechanical connection, preferably liquid-tight, between the coupling 22 and the element to be connected to the box 10. For example, for the connection of metallic conduits, the coupling portion 28 could be formed as disclosed in European patent No. 568032 of the same Applicant.

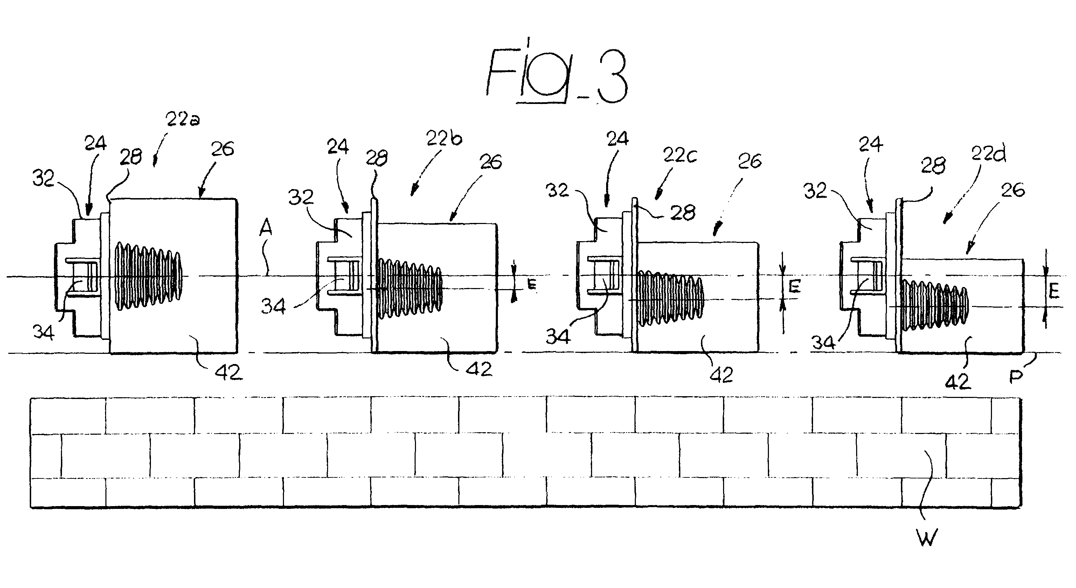

The innovating aspect of the present invention consists essentially in that the coupling section 26 of each coupling 22 is eccentric with respect to the respective attachment section 24. Referring to figure 2, the through hole 30 is aligned with the coupling section 26 and is also eccentric with respect to the attachment section 24. As shown in figure 3, the eccentricity of the coupling section 26 varies depending on the diameter of the tubular portion 42 (or of the threaded hole 38) and is determined so that by arranging a family of couplings 22 with different dimensions of the respective coupling sections 26 with the axes of the respective attachment sections 24 aligned along the same axis A, the coupling sections 26 of all the couplings of the family will be tangent to one and the same plane P. In figure 3 there is shown a family of couplings each having an attachment section 22 with a diameter such that it can be coupled in a hole 20 with a diameter of 32 mm. The nominal diameter of the coupling section (coincident with the nominal diameter of the protection element which it is intended to receive) is 32, 25, 20 and 16 mm, respectively, for the four couplings indicated at 22a, 22b, 22c and 22d. In the case of the coupling 22a for which the diameter of the coupling section is equal to the diameter of the coupling section, the eccentricity is zero, that is the coupling section 26 is coaxial with the attachment section 24. The eccentricity E rises with the difference between the diameter of the attachment section 24 and the diameter of the coupling section 22.

By virtue of this feature, the couplings 22 according to the present invention permits to maintain constant the distance between the protection elements and a wall indicated W in figure 3, independently of their diameter. In this way, deformation of the protection elements is avoided and, in addition to obtaining a better result from the aesthetic point of view, it is easier to fix these elements to the wall W because it is not necessary to use fastening clamps having different dimensions.

## Claims

1. A coupling (22), in particular for boxes (10) for electric material, comprising an attachment section (24) for connecting the coupling (22) into a hole (20) of a wall (12), and a coupling section (26) provided with means (38, 42) for the connection to a protection element of an electric installation,
characterized in that the coupling section (26) is eccentric with respect to the attachment section (24) and is arranged so that by arranging a family of couplings (22a...22d) with different dimensions of the respective coupling sections (26) with the axes (A) of the respective attachment sections (24) aligned with each other, the coupling sections (26) of all the couplings (22a...22d) of the family are tangent to one and the same plane (P).

2. A coupling according to claim 1, characterized in that it comprises a disc-shaped portion (28) which separates the attachment section and the coupling section (24, 26), said disc-shaped portion (28) having a through hole (30) which is eccentric with respect to the attachment section (24).

3. A coupling according to claim 2, characterized in that the coupling section (26) comprises a threaded portion (38) arranged in correspondence with said through hole (30).

4. A coupling according to claim 2, characterized in that the coupling section (26) comprises a tubular portion (42) projecting from said disc-shaped portion (28).

5. A coupling according to claim 3 or claim 4, characterized in that the attachment section (24) comprises a tubular portion (32) having a longitudinal axis (A) parallel and spaced apart with respect to the longitudinal axis of the tubular portion (42) or of the threaded portion (38) of the coupling section (26).

6. A coupling according to any of the preceding claims, characterized in that the attachment section (24) comprises means (34) for snap engagement into a hole (20) of a wall (12), and an annular seal (36) which in use is axially compressed between said disc-shaped portion (28) and the wall (12).

## Patentansprüche

1. Kupplung (22), insbesondere für Gehäuse (10) zur elektrischen Installation, umfassend ein Befestigungssegment (24) zum Einsetzen der Kupplung (22) in ein Loch (20) in einer Wand (12), und ein mit Mitteln (38, 42) zum Anschluß an ein Schutzelement einer elektrischen Anlage versehenes Kupplungssegment (26),
dadurch gekennzeichnet, daß
das Kupplungssegment (26) bezüglich des Befestigungssegmentes (24) exzentrisch ist und derart angeordnet ist, daß durch Anordnen einer Kupplungsschar (22a ... 22d) mit unterschiedlichen Abmessungen der jeweiligen Kupplungssegmente (26) mit den Achsen (A) der jeweils zueinander ausgerichteten Befestigungssegmente (24) die Kupplungssegmente (26) aller Kupplungen (22a ...22d) der Schar tangential zu ein und derselben Ebene (P) sind.

2. Kupplung nach Anspruch 1, dadurch gekennzeichnet, daß sie einen scheibenförmigen Abschnitt (28) umfaßt, der das Befestigungssegment und das Kupplungssegment (24, 26) trennt, wobei der scheibenförmige Abschnitt (28) eine Durchgangsbohrung (30) aufweist, die bezüglich des Befestigungssegmentes (24) exzentrisch ist.

3. Kupplung nach Anspruch 2, dadurch gekennzeichnet, daß das Kupplungssegment (26) einen Gewindeabschnitt (38) umfaßt, der in Übereinstimmung mit der Durchgangsbohrung (30) angeordnet ist.

4. Kupplung nach Anspruch 2, dadurch gekennzeichnet, daß das Kupplungssegment (26) einen rohrförmigen Abschnitt (42) umfaßt, der von dem scheibenförmigen Abschnitt (28) vorspringt.

5. Kupplung nach Anspruch 3 oder Anspruch 4, dadurch gekennzeichnet, daß das Befestigungssegment (24) einen rohrförmigen Abschnitt (32) mit einer Längsachse (A) umfaßt, die zur Längsachse des rohrförmigen Abschnitts (42) oder des Gewindeabschnitts (38) des Kupplungssegmentes (26) parallel beabstandet ist.

6. Kupplung nach einem der vorhergehenden Ansprüche, dadurch gekennzeichnet, daß das Befestigungssegment (24) Mittel (34) für den Rasteingriff in ein Loch (20) in einer Wand (12) sowie eine Ringdichtung (36) umfaßt, die im Gebrauch zwischen dem scheibenförmigen Abschnitt (28) und der Wand (12) axial zusammengedrückt wird.

## Revendications

1. Raccord (22), en particulier pour des boîtes (10) pour du matériel électrique, comportant une section de fixation (24) destinée à relier le raccord (22) à un trou (20) d'une paroi (12), et une section de raccord (26) pourvue de moyens (38, 42) pour le raccordement à un élément de protection d'une installation électrique,
caractérisé en ce que la section de raccord (26) est excentrée par rapport à la section de fixation (24) et est agencée de telle sorte que, en disposant une famille de raccords (22a ... 22d) avec des dimensions différentes des sections de raccord (26) respectives avec les axes (A) des sections de fixation (24) respectives alignées l'un avec l'autre, les sections de raccord (26) de tous les raccords (22a ... 22d) de la famille sont tangentes à un seul et même plan (P).

2. Raccord selon la revendication 1, caractérisé en ce qu'il comporte une partie en forme de disque (28) qui sépare la section de fixation et la section de raccord (24, 26), ladite partie en forme de disque (28) ayant un trou débouchant (30) qui est excentré par rapport à la section de fixation (24).

3. Raccord selon la revendication 2, caractérisé en ce que la section de raccord (26) comporte une partie filetée (38) disposée en correspondance avec ledit trou débouchant (30).

4. Raccord selon la revendication 2, caractérisé en ce que la section de raccord (26) comporte une partie tubulaire (42) qui dépasse de ladite partie en forme de disque (28).

5. Raccord selon la revendication 3 ou 4, caractérisé en ce que la section de fixation (24) comporte une partie tubulaire (32) ayant un axe longitudinal (A) parallèle et espacé par rapport à l'axe longitudinal de la partie tubulaire (42) ou de la partie filetée (38) de la section de raccord (26).

6. Raccord selon l'une quelconque des revendications précédentes, caractérisé en ce que la section de fixation (24) comporte des moyens (34) pour l'engagement par encliquetage dans un trou (20) d'une paroi (12), et un joint annulaire (36) qui est comprimé axialement lors de l'utilisation entre ladite partie en forme de disque (28) et la paroi (12).
